# EUROPEAN PATENT SPECIFICATION

(11) **EP 1 112 892 B1**
(45) Date of publication and mention of the grant of the patent: **31.03.2004**
(21) Application number: 01105200.8
(22) Date of filing: 25.08.1995
(51) Int. Cl.: B60P 1/44, B60P 1/43

(54) **Tailgate of a lorry**
Hebebühne für Lastkraftfahrzeuge
Hayon élévateur pour un camion

(30) Priority: 26.08.1994 DK 98594
(43) Date of publication of application: 04.07.2001
(62) Divisional of application: 95113387.5
(73) Proprietor: Sörensen Hydraulik Zweigniederlassung, Ulfborg, Filial af Sörensen Hydraulik GmbH, Tyskland, 6990 Ulfborg (DK)
(72) Inventor: Jensen, Jens Herman, 6990 Ulfborg (DK)
(74) Representative: Niedmers, Ole, Dipl.-Phys.

(56) References cited:
- DE-U- 8 603 952
- GB-A- 1 368 173
- GB-A- 2 024 141

## Description

The invention relates to a tailgate of a lorry, whereby the tailgate is of the folded type, which comprises a first part and a second part and hinge elements.

The present invention is concerned with tailgates of the type designed to be stored under the platform of a lorry when the tailgate is not in use. Various systems are known for pulling out and retracting a tailgate under the platform of a lorry. Such a system is disclosed e.g. in the BE-A-859 070.

It is the object of the present invention to disclose a tailgate of the folded type, which is easier unfolded than the prior art tailgates.

This object is achieved in that spring members extend between the hinge element and the first and second part, respectively, of the tailgate.

The tailgate is of the folded type, is provided with spring members extending between a hinge element and a first and second part, respectively, of the tailgate. The spring members cooperate in pairs.

A first spring member is in a condition of torsion when the first and second parts of the tailgate are folded. The first spring member assists the user in unfolding the tailgate before use since during the unfolding of the tailgate the first spring member changes from a condition of torsion to one of no torsion. After the tailgate has been completely unfolded, the first spring member is in a condition of no torsion.

A second spring member is in a condition of no torsion when the tailgate is folded. The second spring member changes from a condition of no torsion to one of torsion during the unfolding of the tailgate. After the tailgate has been completely unfolded, the second spring member is in a condition of torsion, however. The second spring member assists the user in folding the tailgate after use since during the folding of the tailgate, the second spring member changes from a condition of torsion to one of no torsion.

The invention will now be described in further detail with reference to the attached drawings, in which
- fig. 1: is a perspective view of a folded-type tailgate according to the invention constituting part of a pull-out system, and
- figs. 2A-2B: show embodiments of spring member pairs for use in combination with a folded-type tailgate according to the invention.

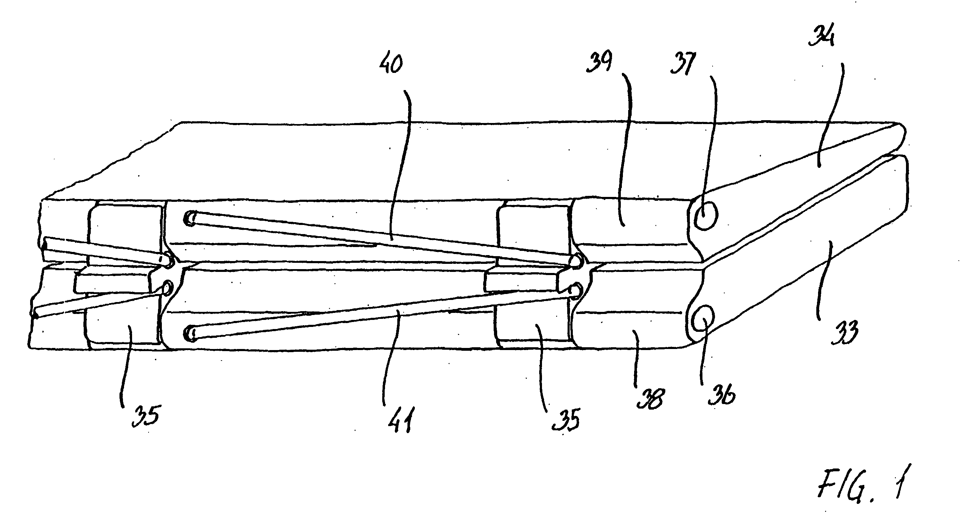

Fig. 1 illustrates a tailgate of the folded type according to the invention which is the most frequently used tailgate in combination with pull-out systems for tailgates in which the tailgate is stored under the platform of the lorry. The tailgate is illustrated in a folded condition. The tailgate comprises a first part 33 and a second part 34, which are mutually secured by hinge elements 35. A first shaft 36 and a second shaft 37 extend along edge areas 38, 39 of the first and second part 33, 34, respectively, of the tailgate and through the hinge elements 35. A first and a second spring member 40, 41 extend between a hinge element 35 and the first and second part 33, 34, respectively, of the tailgate. The spring members are produced from spring wire, and the elastic function of the spring members is generated by torsion of the wire.

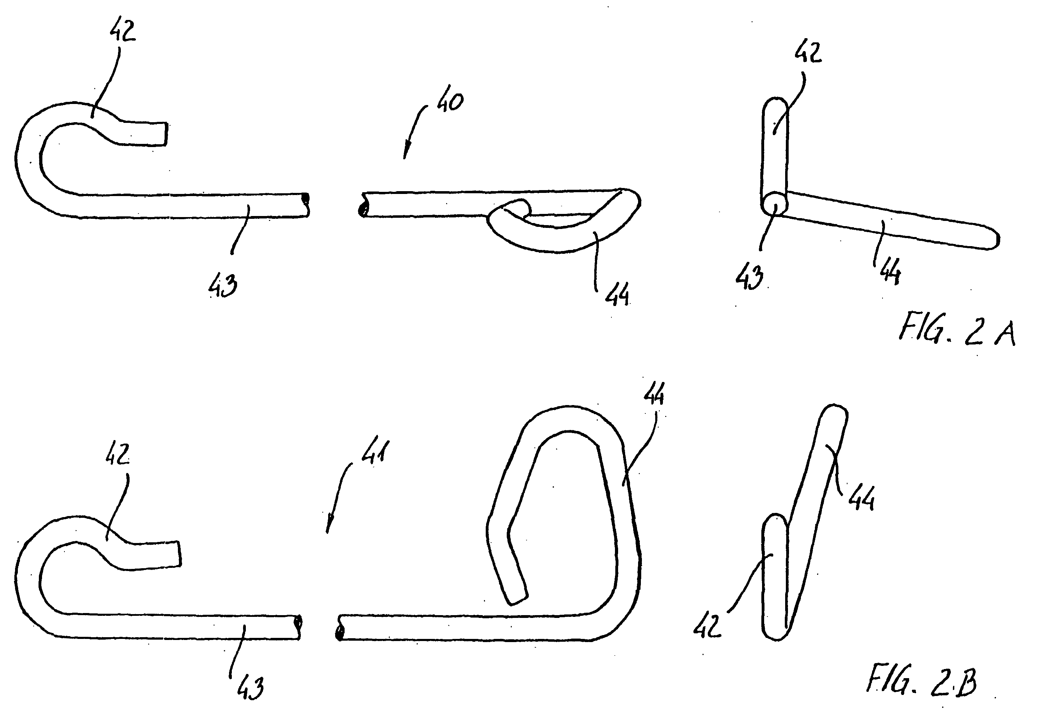

Figs. 2A and 2B illustrate embodiments of a first and a second spring member 40, 41 according to the invention. The spring members extend from a first eye 42 along a rectilinear section 43 and on to a second eye 44. Torsion of the spring members generates an elastic force in the rectilinear part 43 of the spring members. The first spring member 40 is bent in one shape which has the consequence that when the tailgate is folded (see fig. 5), the spring member is in a condition of torsion, and when the tailgate is unfolded, the spring member is in a condition of no torsion. Thus, the first spring member 40 will assist the user in unfolding the tailgate. The second spring member 41 is bent in a second shape which has the consequence that when the tailgate is folded, the spring member is in a condition of no torsion, and when the tailgate is unfolded, the spring member is in a condition of torsion. Thus, the second spring member 41 will assist the user in folding the tailgate.

In the figures, the connection of the tailgate with the connecting sections is not illustrated, but the tailgate is mounted to the connecting sections in a position situated lower than the guides. However, if the tailgate is of the type to be folded before it is retracted under the platform of the lorry, the tailgate will be positioned between the two guides in its folded condition. Placing the folded tailgate between the two guides is known in the prior art.

Furthermore, the spring members, their positions and the way in which the members are bent may be provided in different ways.

## Claims

1. A tailgate of a lorry, whereby the tailgate is of the folded type, which comprises a first part (33) and a second part (34) and hinge elements (35), **characterised in that** spring members (40, 41) extend between the hinge element and the first and second part, respectively, of the tailgate.

2. A tailgate according to claim 1, **characterised in that** the spring members (40, 41) are produced from spring wire and comprise a rectilinear section (43) designed to exert an elastic force by torsion during unfolding and folding of the tailgate.

3. A tailgate according to claim 1 or 2, **characterised in that** the spring members extend from a first eye (42) along a rectilinear section (43) and on to a second eye (44).

4. A tailgate according to claim 3, **characterised in that** the first spring member (40) is bent in one shape which has the consequence that when the tailgate is folded, the spring member is in a condition of torsion, and when the tailgate is unfolded, the spring member (40) is in a condition of no torsion.

5. A tailgate according to claim 3 or 4, **characterised in that** the second spring number (41) is bent in a second shape which has the consequence that when the tailgate is folded, the spring is in a condition of no torsion, and when the tailgate is unfolded the spring member is in a condition of torsion.

## Patentansprüche

1. Hebebühne für Lastkraftfahrzeuge, bei welcher die Hebebühne von einklappbarer Art ist und ein erstes Teil (33) sowie ein zweites Teil (34) und Scharnierelemente (35) aufweist, **dadurch gekennzeichnet, daß** sich zwischen dem Scharnierteil und dem ersten bzw. zweiten Teil der Hebebühne Federteile (40, 41) erstrecken.

2. Hebebühne nach Anspruch 1, **dadurch gekennzeichnet, daß** die Federteile (40, 41) aus Federdraht hergestellt sind und einen geradlinigen Abschnitt (43) aufweisen, der so ausgelegt ist, daß er während des Aufklappens und Zuklappens der Hebebühne durch Torsion eine elastische Kraft ausübt.

3. Hebebühne nach Anspruch 1 oder 2, **dadurch gekennzeichnet, daß** sich die Federteile von einer ersten Öse (42) aus entlang eines geradlinigen Abschnitts (43) zu einer zweiten Öse (44) hin erstrecken.

4. Hebebühne nach Anspruch 3, **dadurch gekennzeichnet, daß** das erste Federteil (40) in eine Form gebogen ist, mit der Folge, daß dann, wenn die Hebebühne zusammengeklappt ist, das Federteil sich in einem Torsionszustand befindet, und dann, wenn die Hebebühne aufgeklappt ist, das Federteil (40) sich in einem torsionsfreien Zustand befindet.

5. Hebebühne nach Anspruch 3 oder 4, **dadurch gekennzeichnet, daß** das zweite Federteil (41) in eine zweite Form gebogen ist, mit der Folge, daß dann, wenn die Hebebühne aufgeklappt ist, die Feder sich in einem torsionsfreien Zustand befindet, und dann, wenn die Hebebühne aufgeklappt ist, das Federteil sich in einem Torsionszustand befindet.

## Revendications

1. Hayon d'un camion, moyennant quoi le hayon est du type plié, lequel comprend une première partie (33) et une seconde partie (34) et des éléments d'articulation (35), **caractérisé en ce que** des éléments formant ressort (40, 41) s'étendent entre l'élément d'articulation et la première et la seconde partie, respectivement, du hayon.

2. Hayon selon la revendication 1, **caractérisé en ce que** les éléments formant ressort (40, 41) sont réalisés à partir de fil à ressort et comprennent une section rectiligne (43) conçue pour exercer une pression élastique par torsion durant le dépliage et le pliage du hayon.

3. Hayon selon la revendication 1 ou 2, **caractérisé en ce que** les éléments formant ressort s'étendent à partir d'un premier oeil (42) le long d'une section rectiligne (43) et sur un second oeil (44).

4. Hayon selon la revendication 3, **caractérisé en ce que** le premier élément formant ressort (40) est courbé en une forme qui a la conséquence que lorsque le hayon est plié, l'élément formant ressort se trouve dans une condition de torsion, et lorsque le hayon est déplié, l'élément formant ressort (40) se trouve dans une condition de non torsion.

5. Hayon selon la revendication 3 ou 4, **caractérisé en ce que** le second élément formant ressort (41) est courbé en une seconde forme qui a la conséquence que lorsque le hayon est plié, l'élément formant ressort se trouve dans une condition de non torsion, et lorsque le hayon est déplié, l'élément formant ressort se trouve dans une condition de torsion.
